# EUROPÄISCHE PATENTSCHRIFT

(11) **EP 3 705 416 B1**
(45) Veröffentlichungstag und Bekanntmachung des Hinweises auf die Patenterteilung: **06.04.2022**
(21) Anmeldenummer: 20155992.9
(22) Anmeldetag: 07.02.2020
(51) Int. Cl.: B65D 25/10, A47J 39/02, B65D 81/38, F25D 3/08, F25D 23/02, A47J 47/14

(54) **ISOLIERBEHÄLTER**
INSULATING CONTAINER
RÉCIPIENT ISOLANT

(30) Priorität: 07.03.2019 DE 102019105846
(43) Veröffentlichungstag der Anmeldung: 09.09.2020
(73) Patentinhaber: Storopack Hans Reichenecker GmbH, 72555 Metzingen (DE); thermohauser GmbH, 73066 Uhingen (DE)
(72) Erfinder: Mohamed, Nadine, 72663 Großbettlingen (DE); Schulz, Jörg, 72585 Riederich (DE); Decker, Peter, 78532 Tuttlingen (DE)
(74) Vertreter: DREISS Patentanwälte PartG mbB

(56) Entgegenhaltungen:
- DE-A1- 4 337 649
- DE-U1- 29 705 921
- DE-U1- 29 718 826
- DE-U1-202009 001 970

## Beschreibung

Die Erfindung betrifft einen Isolierbehälter mit den Merkmalen des Oberbegriffs von Anspruch 1.

Bei einem Isolierbehälter handelt es sich im einfachsten Fall um einen aus einem Unterteil und einem Oberteil gebildeten Behälter aus einem isolierenden Material, wie z.B. in DE 44 13 703 A1 gezeigt. Mit einem solchen Transport- oder Isolierbehälter können bspw. Speisen transportiert und während des Transports warm oder kühl gehalten werden.

Ein Isolierbehälter der eingangs genannten Art ist bspw. in DE 32 44 743 A1 beschrieben, wobei dieser als Fahrzeugaufbau für einen LKW oder Transporter ausgebildet ist. Der Isolierbehälter verfügt über eine aus mehreren Lamellen zusammengesetzte Rollwand, die im Verbindungsbereich zwischen den Lamellen jeweils Halbschalen, Verbindungsbänder und Kunststoffausschäumungen aufweist. Hiermit soll trotz Rollwand eine hinreichende Dämmung erreicht werden. Nachteilig ist der hohe konstruktive Aufwand bei Fertigung und Montage auf Grund der Vielzahl der für die Rollwand erforderlichen Komponenten.

Ferner beschreibt das DE 297 05 921 U1 einen Transportbehälter für warme Fertiggerichte mit den Merkmalen des Oberbegriffs des Anspruchs 1. Aus dem DE 297 18 826 U1 ist ein Isolierbehälter für Konditorwaren bekannt. Die DE 43 37 649 A1 beschreibt einen Lager- und Transportbehälter.

Der Erfindung liegt die Aufgabe zugrunde, einen Isolierbehälter mit Schiebewand bereitzustellen, der bei guten Dämmungseigenschaften einen konstruktiv einfachen Aufbau aufweist.

Die Erfindung löst diese Aufgabe durch einen Isolierbehälter mit den Merkmalen des Anspruchs 1. Danach zeichnet sich der Isolierbehälter dadurch aus, dass die Schiebewand mehrere relativ zueinander bewegliche, insbesondere mehrere relativ zueinander verschwenkbare, Abschnitte aufweist, wobei die Schiebewand einstückig aus geschäumtem Kunststoff ausgebildet ist.

Auf diese Weise ist eine einfache Herstellung der Schiebewand und des Isolierbehälters ermöglicht, wobei gute Dämmungs- bzw. Isolationseigenschaften erreicht werden können. Neben günstiger Fertigung und Montage des Isolierbehälters trägt die einstückige Ausgestaltung der Schiebewand zu einfachem Recycling bei (kein Zerlegen oder getrenntes Entsorgen von Schiebewandkomponenten erforderlich).

Eine Herstellung der Schiebewand und der der Schiebewand eingeprägten Merkmale erfolgt durch Schäumen, d.h. die Schiebewand wird durch Aufschäumen eines schäumbaren Kunststoffs ausgebildet. Optional können weitere Komponenten des Isolierbehälters, bspw. ein Behälterkorpus (Behälterboden und davon abragende Behälterwandungen) und/oder ein Deckel des Isolierbehälters, aus geschäumtem Kunststoff ausgebildet sein. Die Schiebewand weist durch die relativ zueinander beweglichen oder verschwenkbaren Abschnitte insgesamt eine biegsame bzw. reversibel verformbare Struktur auf, so dass die Schiebewand zwischen der den Zugang verschließenden und der den Zugang freigebenden Stellung verschoben werden kann.

Bei dem Isolierbehälter handelt es sich insbesondere um einen tragbaren Isolierbehälter, d.h. einen Isolierbehälter, der durch eine erwachsene Person manuell gehandhabt und/oder getragen werden kann. Der Isolierbehälter weist einen Innenraum (Stauraum) auf, der zur Aufnahme von Speisebehältern oder Tabletts für Speisen geeignet ist.

Der Isolierbehälter kann im Wesentlichen quaderförmig ausgebildet sein. Der Isolierbehälter kann an einer unteren Behälterwandung bzw. einem Behälterboden eine Standfläche mit einem oder mehreren Standabschnitten aufweisen, mittels der der Isolierbehälter auf einem Untergrund abgestellt werden kann. Gegenüberliegend zur Standfläche (gegenüberliegende Körperseite) kann der Isolierbehälter an der oberen Behälterwandung oder Behälterdecke eine Deckfläche aufweisen. Die obere Behälterwandung oder Behälterdecke kann optional als abnehmbarer Deckel des Isolierbehälters ausgebildet sein kann.

Zwischen Standfläche und Deckfläche weist der Isolierbehälter zu den Körperseiten hin jeweils seitliche Behälterwandungen auf, wobei an einer der seitlichen Behälterwandungen der Zugang zum Innenraum mit Schiebewand ausgebildet ist. Der Zugang kann sich über einen Abschnitt der betreffenden Behälterwandung erstrecken. Der Zugang kann jedoch auch derart groß ausgebildet sein, dass die betreffende Behälterwandung nahezu vollständig oder vollständig entfällt.

Durch den an einer Behälterseite angeordneten Zugang ergibt sich am Isolierbehälter die Konfiguration eines "Frontloaders" (Beladung von vorne, bspw. von einer Schmalseite des Isolierbehälters). Die Schiebewand ist insbesondere derart am oder im Isolierbehälter angeordnet, dass diese durch Verschieben zur Standfläche hin den Zugang verschließt und durch Verschieben von der Standfläche weg den Zugang freigibt.

Wie bereits angedeutet, ist die Schiebewand als Wandabschnitt ausgebildet, der, wenn sich die Schiebewand in der den Zugang verschließenden Stellung befindet, zumindest einen Teil der den Zugang beherbergenden Behälterwandung bildet oder diese (bei groß dimensioniertem Zugang) ggf. vollständig ersetzt.

An der Schiebewand kann an der Außenfläche (im montierten Zustand vom Innenraum abgewandt) ein abragender Griffabschnitt ausgebildet sein. Dieser erleichtert einer Bedienperson ein Verschieben der Schiebewand. Optional kann ein Beschriftungsfeld an der Schiebewand angeordnet sein (Außenseite), um, bspw. durch Einsteck- oder Aufklebeetiketten, eine Individualisierung von Isolierbehältern zu ermöglichen. Optional kann an oder in der Schiebewand ein Thermometer angeordnet sein, welches die im Innenraum des Isolierbehälters herrschende Temperatur an der Außenseite der Schiebewand anzeigt. An der Innenseite der Schiebewand kann ein Temperaturfühler des Thermometers angeordnet sein.

Im Rahmen einer bevorzugten Ausgestaltung kann die Schiebewand an einer Flachseite mehrere voneinander beabstandete Nuten aufweisen, die quer, insbesondere orthogonal, zur Verschieberichtung und/oder Längserstreckungsrichtung der Schiebewand angeordnet sind. Die Nuten sind an der in Einbaulage dem Innenraum zugewandten Schiebewandseite angeordnet (Innenseite). Mittels der Nuten ist auch bei einem vergleichsweise starken Schiebewandquerschnitt bspw. ein Verschieben oder Einschieben der Schiebewand in den Isolierbehälter ermöglicht, da sich entsprechend der Anzahl der Nuten mehrere relativ zueinander bewegliche oder verschwenkbare Abschnitte der Schiebewand ergeben (segmentartige Schiebewandabschnitte). Die Nuten verjüngen jeweils den Schiebewandquerschnitt, wobei sich im Nutbereich jeweils eine Schwenkachse ausbilden kann. Die Nuten sind gleichartig ausgerichtet, insbesondere parallel zueinander (Mittellängsrichtung der Nuten parallel orientiert). Die Nuten können einen V-förmigen oder trapezförmigen (trapezoidalen) Querschnitt aufweisen. Ein beweglicher oder verschwenkbarer Abschnitt kann insbesondere durch eine Nut und einen an die Nut angrenzenden (verdickten) Materialabschnitt gebildet sein.

Mit anderen Worten kann die Schiebewand derart ausgebildet sein, dass diese einen Basisabschnitt (z.B. quaderförmiger Schiebewandabschnitt) und mehrere darauf ausgebildete (verdickte) Materialabschnitte aufweist, bspw. mit trapezförmigem Querschnitt. Durch eine solche Ausgestaltung der Schiebewand folgen (im Querschnitt) dicke und dünne Schiebewandabschnitte abwechselnd aufeinander. Benachbarte (dicke) Schiebewandabschnitte sind durch den dazwischen befindlichen (dünnen) Schiebwandabschnitt relativ zueinander verschwenkbar. Es ergeben sich mehrere relativ zueinander bewegliche oder verschwenkbare Schiebewandabschnitte.

In zweckmäßigerweise kann in den Nuten jeweils ein Abstandselement angeordnet sein, welches zur Stirnfläche der zwischen den Nuten liegenden Materialabschnitte (verdickte Materialabschnitte) zumindest bündig ist (Abstandselement ist bündig oder ragt über Stirnfläche hinaus). Die Abstandselemente dienen jeweils als Anschlag für im Isolierbehälter aufgenommene Speisebehälter oder Tabletts.

Damit kann vermieden werden, dass die Speisebehälter oder Tabletts beim Transport in die Nuten der Schiebewand eindringen und damit ein Öffnen der Schiebewand blockieren. Die Abstandselemente sind insbesondere materialeinheitlich mit der Schiebewand ausgebildet. Die Abstandselemente können jeweils eine quaderförmige oder zylindrische Struktur aufweisen. Ihre Breite bzw. Höhe ist so gewählt, dass ein Eindringen eine Speisebehälters oder Tabletts in eine der Nuten der Schiebewand zuverlässig verhindert wird.

Optional können die Abstandselemente von zwei zueinander benachbarten Nuten zueinander in normaler Betriebslage seitlich versetzt angeordnet sein und eine Höhe aufweisen, die mindestens ungefähr bis zur Mitte der benachbarten Nuten reicht. Dies gestattet ein zuverlässiges Verhindern eines Eindringens eines Speisebehälters oder Tabletts in eine Nut, und sorgt gleichzeitig dafür, dass die Biegsamkeit des Materials der Schiebewand zwischen den Nuten möglichst wenig beeinträchtigt wird, was besonders vorteilhaft ist, wenn die Schiebewand längst einer gekrümmten Führungsbahn zu bewegen ist, wenn der Isolierbehälter geöffnet bzw. geschlossen werden soll.

Optional kann ein in normaler Betriebslage unmittelbar oberhalb oder unterhalb von einem Abstandselement angeordneter Rippenabschnitt, der zwischen zwei benachbarten Nuten angeordnet ist, eine geringere Breite aufweisen als ein Rippenabschnitt, der oberhalb oder unterhalb von einem benachbarten Rippenabschnitt angeordnet ist. Dies verbessert nochmals die Biegsamkeit der Schiebewand dann, wenn diese längs einer gekrümmten Führungsbahn bewegt werden soll.

Optional kann an der dem Innenraum zugewandten Flachseite (Innenseite) der Schiebewand eine sich entlang der Längsrichtung der Schiebewand erstreckende, vorzugsweise mittig positionierte, Trennungsnut angeordnet sein. Durch die Trennungsnut sind die zwischen den Nuten liegenden Materialabschnitte (verdickte Materialabschnitte) unterbrochen (lediglich der Basisabschnitt verbleibt). Die Trennungsnut ist insbesondere breiter ausgebildet als die Abstandselemente. Dadurch wird ein Bewegen oder Verschwenken der Schiebewandabschnitte relativ zueinander durch die Abstandselemente nicht beeinträchtigt. Zudem können die Abstandselemente (entlang der Längsrichtung der Schiebewand gesehen) damit einen höheren Querschnitt aufweisen, der bspw. in einer Projektion den Querschnitt einer (quer zur Verschieberichtung angeordneten) Nut überdeckt. Dies begünstigt eine Anlage zu Speisebehälter oder Tabletts.

Vorteilhafterweise kann an den Innenseiten (dem Innenraum zugewandt) von zwei einander gegenüberliegenden Behälterwandungen, die den Zugang seitlich begrenzen, jeweils eine Führungsbahn ausgebildet sein, an oder in der die Schiebewand verschieblich geführt ist. Hiermit ist eine konstruktiv einfache und hinreichend stabile Führung geschaffen. Die Führungsbahn ist insbesondere jeweils materialeinheitlich mit der betreffenden Behälterwandung ausgebildet. Die Führungsbahn kann jeweils als Nut in der Behälterwandung (Wandinnenseite) ausgebildet sein. Ebenfalls denkbar ist eine Ausgestaltung mit zwei an der Behälterwandung nebeneinander angeordneten Vorsprüngen, die zwischen sich einen Zwischenraum (Vertiefung) einschließen. Die Schiebewand kann an ihren beiden Längsseiten abschnittsweise in den Zwischenraum oder die Nut eingreifen (in die Führungsbahn hineinragende Abschnitte).

Im Konkreten kann die Führungsbahn einen ersten Abschnitt aufweisen, in oder an dem sich die Schiebewand in einer den Zugang verschließenden Stellung befindet. Weiter kann die Führungsbahn einen zweiten Abschnitt aufweisen, in oder an dem sich die Schiebewand in einer den Zugang freigebenden Stellung befindet (Schiebewand kann sich dann zumindest teilweise im Innenraum des Isolierbehälters befinden). Zudem kann die Führungsbahn einen gekrümmten oder bogenförmigen Verbindungsabschnitt aufweisen, der den ersten Abschnitt und den zweiten Abschnitt miteinander verbindet. Anders ausgedrückt können der erste Abschnitt und der zweite Abschnitt der Führungsbahn zwischen sich einen Winkel einschließen, bspw. einen Winkel von etwa 90° (90±5°), und durch den gekrümmten oder bogenförmigen Verbindungsabschnitt miteinander verbunden sein.

Im Rahmen einer bevorzugten Ausgestaltung können die in der Führungsbahn geführten Abschnitte der Schiebewand (in die Führungsbahn hineinragende Abschnitte) geschäumte Kontaktflächen aufweisen, insbesondere mit einer entlang der Verschieberichtung und/oder Längserstreckungsrichtung ausgerichteten Strukturierung in den geführten Abschnitten. Die Strukturierung kann jeweils an der Innenfläche und/oder an der Außenfläche eines geführten Abschnitts der Schiebewand ausgebildet sein. Den Kontaktflächen, die mit den entsprechenden Gegenflächen der Nut bzw. des Zwischenraums in Kontakt gelangen, werden somit durch die Strukturierung direkt bei der Herstellung verbesserte Reibungseigenschaften einverleibt. Dies trägt zu einer erleichterten Betätigung der Schiebewand bei. Die Strukturierung kann bspw. als Rillen, Wellen oder eine durch Lasern hergestellte Struktur (Laserstruktur) ausgebildet sein.

Im Konkreten kann der Isolierbehälter einen Behälterkorpus (Korpus) und einen abnehmbaren Deckel aufweisen. Der Deckel kann die obere Behälterwandung oder Behälterdecke bilden. Dies erleichtert Handhabung und Montage, bspw. indem zunächst die Schiebewand in die Führungsbahn eingeführt und danach der Deckel aufgebracht werden kann. Auch die Reinigung des Isolierbehälters kann durch den abnehmbaren Deckel erleichtert werden.

Der Isolierbehälter kann somit lediglich aus drei Teilen ausgebildet sein, nämlich dem Behälterkorpus, dem Deckel und der Schiebewand. Der Behälterkorpus, der Deckel und die Schiebewand können jeweils einstückig bzw. materialeinheitlich ausgebildet sein, insbesondere aus geschäumtem Kunststoff.

Der Behälterkorpus kann als Behälterwandungen eine Bodenplatte bzw. einen Behälterboden (untere Behälterwandung mit Standfläche) und mehrere hiervon abragende Behälterwandungen aufweisen, insbesondere die den Zugang aufweisende Behälterwandung, zwei seitliche Behälterwandungen, die den Zugang seitlich begrenzen, und/oder eine rückwärtige Behälterwandung (Rückwand), die die zwei seitlichen Behälterwandungen (Seitenwände) miteinander verbindet.

Im Rahmen einer bevorzugten Ausgestaltung kann die rückwärtige Behälterwandung, die dem Zugang gegenüberliegt, eine geringere Höhe aufweisen als die seitlichen Behälterwandungen (Seitenwände), die den Zugang seitlich begrenzen. Dadurch wird ein (rückwärtiges) Einführen der Schiebewand in die Führungsbahn erleichtert. Die Oberkante der Rückwand ist insbesondere unterhalb der Führungsbahn (zweiter Abschnitt der Führungsbahn) angeordnet.

In zweckmäßiger Weise kann der Deckel an einer im montierten Zustand dem Innenraum zugewandten Flachseite (Deckelunterseite) einen Wandungsvorsprung aufweisen, der dazu ausgebildet ist, im montierten Zustand einen von der rückwärtigen Behälterwandung zwischen den seitlichen Behälterwandungen freigelassenen Wandungsabschnitt (bei aufgesetztem Deckel) zu verschließen. Der Wandungsvorsprung ist insbesondere materialeinheitlich mit dem Deckel ausgebildet. Dadurch kann der freigelassene Wandungsabschnitt auf einfache Weise verschlossen werden, ohne dass eine Handhabung weiterer Komponenten erforderlich ist.

Der Deckel kann an einer im montierten Zustand dem Innenraum abgewandten Flachseite (Deckeloberseite), insbesondere angrenzend an die Längskanten, seitliche Aussparungen (Vertiefungen) aufweisen. Diese erleichtern die Stapelbarkeit des Isolierbehälters. Dabei sind die Aussparungen insbesondere korrespondierend oder komplementär zu am Behälterboden ausgebildeten Standabschnitten ausgebildet.

In vorteilhafter Weise kann der Deckel an einer Flachseite gleichartig orientierte, insbesondere parallel zueinander angeordnete, (deckelseitige) Profilmerkmale aufweisen, die mit am Behälterkorpus ausgebildeten (korpusseitigen) komplementären Profilmerkmalen zusammenwirken, die ebenfalls gleichartig orientiert sind, insbesondere parallel zueinander angeordnet sind. Damit kann der Deckel auf den Behälterkorpus aufgeschoben werden. Die deckelseitigen Profilmerkmale sind insbesondere an der dem Innenraum zugewandten Deckelunterseite ausgebildet.

Die Profilmerkmale können bspw. als Nut und als korrespondierendes Nuteingriffselement ausgebildet sein, bspw. als T-Nut und T-förmiges Nuteingriffselement. Die Nut (bspw. T-Nut) kann bspw. am Behälterkorpus angeordnet sein und das (bspw. T-förmige) Eingriffselement kann am Deckel angeordnet sein (umgekehrte Anordnung ebenfalls denkbar).

In zweckmäßiger Weise können die zwei gegenüberliegenden Behälterwandungen, die den Zugang seitlich begrenzen, insbesondere in einem dem Deckel zugewandten Wandungsabschnitt, jeweils einen seitlich nach außen abragenden Vorsprung zum Greifen des Isolierbehälters aufweisen (korpusseitige Griffabschnitte). Dies trägt zu einer ergonomischen Handhabung bei, da der Isolierbehälter nicht an der Unterseite ergriffen werden muss. Optional kann der Deckel in seiner Breite derart dimensioniert sein, dass dieser die korpusseitigen Griffabschnitte (bei aufgesetztem Deckel) überdeckt und vorzugsweise seitlich bündig mit den korpusseitigen Griffabschnitten abschließt.

Vorteilhafterweise können an den Innenseiten (dem Innenraum zugewandt) von zwei einander gegenüberliegenden Behälterwandungen, die den Zugang seitlich begrenzen, jeweils mehrere gleichartig ausgerichtete, insbesondere parallel zueinander angeordnete, Erhebungen (Vorsprünge) oder Vertiefungen (Nuten) ausgebildet sein. Die Erhebungen oder Vertiefungen sind insbesondere parallel zur Standfläche ausgebildet. Die Erhebungen oder Vertiefungen erlauben ein Einschieben von Tabletts oder Speisebehältern über den Zugang. Die Erhebungen oder Vertiefungen sind insbesondere materialeinheitlich mit der betreffenden Behälterwandung ausgebildet.

Im Rahmen einer bevorzugten Ausgestaltung kann der Behälterboden am Zugang eine Abstufung aufweisen, mit der die Schiebewand in der den Zugang verschließenden Stellung überlappt. Anders ausgedrückt befindet sich dann, wenn sich die Schiebewand im geschlossenen Zustand befindet, die Unterkante der Schiebewand unterhalb des Niveaus der Abstufung bzw. des Bodens des Innenraums des Isolierbehälters. Dadurch können im unteren Bereich der Schiebewand verbesserte Dichtungswirkungen und Dämmungen erreicht werden.

In vorteilhafter Weise kann die Schiebewand am oberen Schiebewandende (oberer Endbereich) an einer Flachseite (Außenseite) einen abragenden Vorsprung aufweisen, der einen am Isolierbehälter, insbesondere am Deckel, ausgebildeten korrespondierenden Vorsprung, in der den Zugang verschließenden Stellung der Schiebwand hintergreift. Hiermit können auch im oberen Bereich der Schiebewand hinreichende Dichtungswirkungen und Dämmungen erreicht werden.

Im Rahmen einer bevorzugten Ausgestaltung kann die Schiebewand, vorzugsweise auch der Behälterkorpus und/oder der Deckel, aus expandiertem Polystyrol (EPS) oder aus expandiertem Polypropylen (EPP) ausgebildet sein. Dies trägt zu einer kostengünstigen, leichten und stabilen Bauweise des Isolierbehälters bei. Mit EPS kann ein leichter und kostengünstiger Isolierbehälter bereitgestellt werden, der insbesondere als Einwegverpackung geeignet ist. Mit EPP kann ein vergleichsweise stabiler Isolierbehälter mit hoher Lebensdauer bereitgestellt werden, der sich auch als Mehrwegverpackung eignet.

Die Erfindung wird im Folgenden anhand der Figuren näher erläutert, wobei gleiche oder funktional gleiche Elemente mit identischen Bezugszeichen versehen sind, ggf. jedoch lediglich einmal. Es zeigen:
- Fig.1a: eine Ausführungsform des Isolierbehälters mit durch die Schiebewand verschlossenem Zugang in einer perspektivischen Ansicht;
- Fig.1b: der Isolierbehälter aus Figur 1a mit freigegebenem Zugang (Schiebewand geöffnet);
- Fig.2a: der Isolierbehälter gemäß Figur 1a in einer teilweise geschnittenen Seitenansicht gemäß Schnitt 2A-2A in Figur 1a;
- Fig.2b: der Isolierbehälter gemäß Figur 1b in einer teilweise geschnittenen Seitenansicht gemäß Schnitt 2B-2B in Figur 1b;
- Fig.3a,b: die Schiebewand des Isolierbehälters aus Figur 1 in einer perspektivischen Vorderansicht (Figur 3a) und einer perspektivischen Rückansicht (Figur 3b);
- Fig.4a,b: den Behälterkorpus des Isolierbehälters aus Figur 1 in Alleinstellung (Figur 4a) und den Deckel des Isolierbehälters aus Figur 1 in Alleinstellung (Figur 4b) in perspektivischen Ansichten; und
- Figur 5: eine Draufsicht von Innen auf einen Bereich einer alternativen Schiebewand.

Funktionsäquivalente Elemente und Bereiche tragen auch in unterschiedlichen Ausführungsformen die gleichen Bezugszeichen.

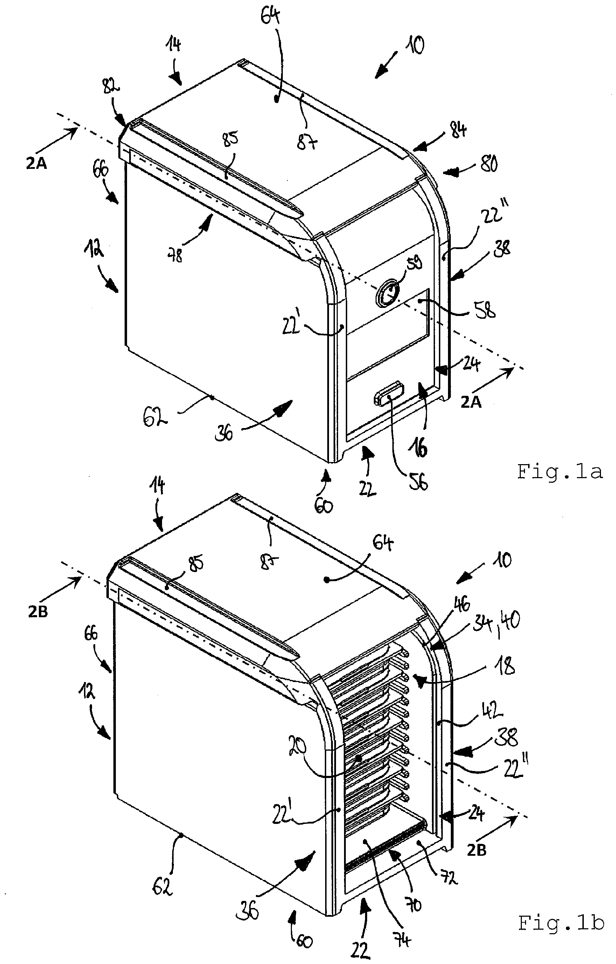

Die Figuren 1a und 1b zeigen einen Isolierbehälter, der insgesamt mit dem Bezugszeichen 10 bezeichnet ist. Der Isolierbehälter 10 ist aus drei Komponenten gebildet, nämlich einem Behälterkorpus 12, einem Deckel 14 und einer Schiebewand 16. Diese Komponenten werden nachfolgend beschrieben.

Der Isolierbehälter 10 weist einen durch mehrere Behälterwandungen begrenzten Innenraum 18 auf, der zur Aufnahme von Speisebehältern oder Tabletts 20 ausgebildet ist. Der Isolierbehälter 10 ist als (durch eine erwachsene Person) tragbarer Behälter ausgebildet. Eine der Behälterwandungen, die Behälterwandung 22, weist einen Zugang 24 zum Innenraum 18 des Isolierbehälters 10 auf. Der Zugang 24 ist derart groß dimensioniert, dass von der Behälterwandung 22 lediglich schmale Wandungsabschnitte 22', 22" verbleiben.

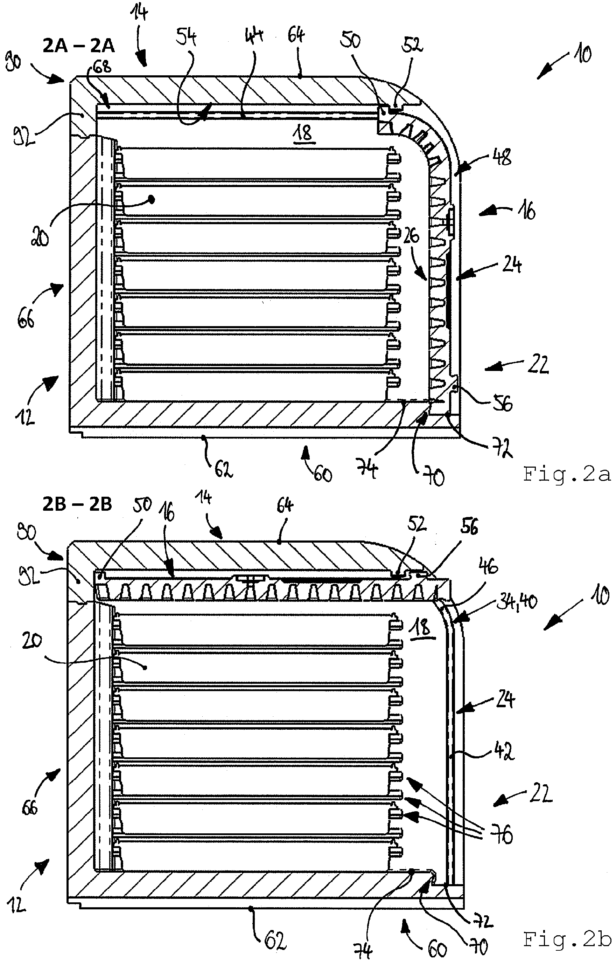

Der Zugang 24 ist mit der Schiebewand 16 ausgestattet, die zwischen einer den Zugang 24 verschließenden Stellung (siehe Figur 1a und 2a) und einer den Zugang 24 freigebenden Stellung (siehe Figur 1b und 2b) verschiebbar ist. In der den Zugang 24 freigebenden Stellung kann die Schiebewand 16 in den Isolierbehälter 10 eingeschoben sein. Somit können Speisebehälter oder Tabletts 20 durch den Zugang 24 aus dem Innenraum 18 entnommen oder in den Innenraum 18 eingestellt werden.

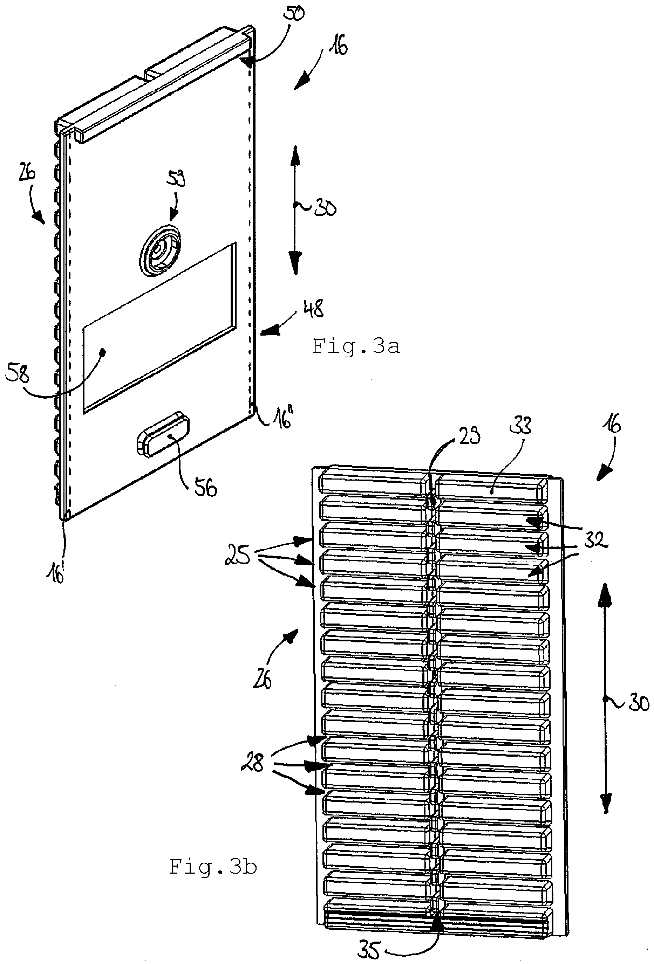

Die Schiebewand 16 weist mehrere relativ zueinander bewegliche bzw. verschwenkbare Abschnitte 25 auf (vgl. Fig.3b) und ist einstückig ausgebildet, und zwar aus geschäumtem Kunststoff. Im Ausführungsbeispiel sind auch der Behälterkorpus 12 und der Deckel 14 jeweils einstückig aus geschäumtem Kunststoff ausgebildet. Bei dem geschäumten Kunststoff kann es sich insbesondere um EPP oder EPS handeln, wie oben beschrieben.

Die Schiebewand 16 weist an einer Flachseite 26 (Innenseite 26) mehrere voneinander beabstandete Nuten 28 auf, die quer, insbesondere orthogonal, zur Verschieberichtung oder Längserstreckungsrichtung 30 der Schiebewand 16 angeordnet sind (vgl. Figuren 2 und 3). Dadurch folgen abwechselnd (im Querschnitt) dicke Schiebewandabschnitte (Materialabschnitte oder Abschnitte mit vollem Profilquerschnitt 32) und dünne Schiebewandabschnitte (Nuten 28) aufeinander. Die Nuten 28 verjüngen den Schiebewandquerschnitt stellenweise, so dass benachbarte Materialabschnitte 32 durch die zwischenliegende Nut 28 relativ zueinander verschwenkbar sind (im Bereich der Nut 28 ergibt sich jeweils eine Schwenkachse). Die Abschnitte 25 können sich somit relativ zueinander bewegen oder verschwenken, so dass die Schiebewand 16 entlang einer Führungsbahn 34 verschoben werden kann. Ein Abschnitt 25 ist hierbei insbesondere durch eine Nut 28 und einen an die Nut 28 angrenzenden Materialabschnitt 32 gebildet.

In den Nuten 28 der Schiebewand 16 ist jeweils ein Abstandselement 29 angeordnet, welches zur Stirnfläche 33 der zwischen den Nuten 28 liegenden Materialabschnitte 32 bündig ist oder über diese hinausragt. Damit kann ein Blockieren der Schiebewand 16 durch beim Transport in die Nuten 28 eindringende Speisebehälter oder Tabletts 20 vermieden werden, wie oben beschrieben. Die Abstandselemente 29 sind materialeinheitlich mit der Schiebewand 16 ausgebildet und können eine quaderförmige oder zylindrische Struktur aufweisen.

An der Innenseite 26 ist eine sich entlang der Längsrichtung 30 der Schiebewand 16 erstreckende mittig positionierte Trennungsnut 35 angeordnet, die die in einer Flucht liegenden Materialabschnitte 32 unterbricht. Die Abstandselemente 29 sind in der Trennungsnut 35 angeordnet. Dadurch wird eine Bewegung der relativ zueinander beweglichen oder verschwenkbaren Abschnitte 25 durch die Abstandselemente 29 nicht beeinträchtigt, wie oben beschrieben.

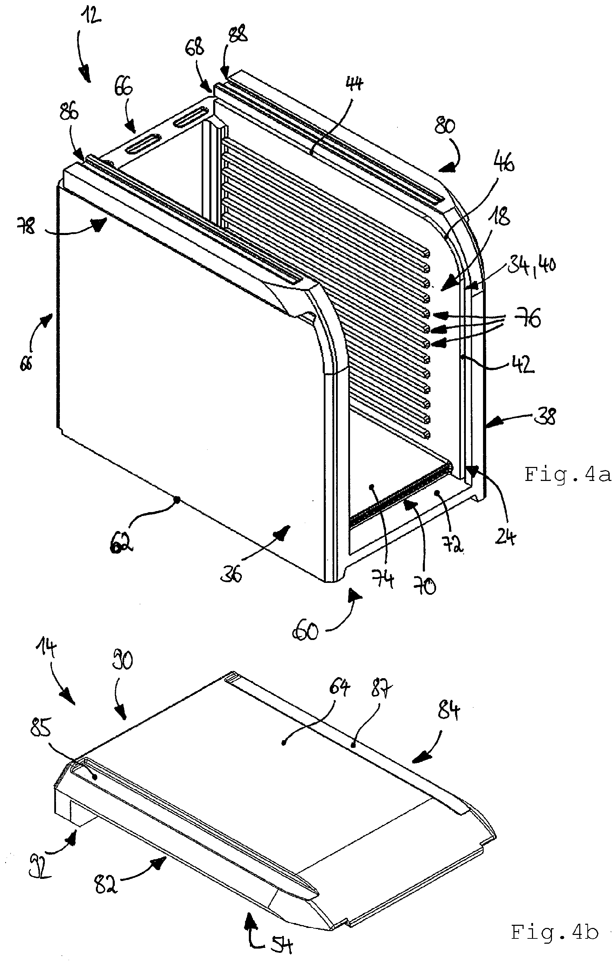

An den Innenseiten (dem Innenraum 18 zugewandte Seiten) von zwei einander gegenüberliegenden Behälterwandungen 36, 38, die den Zugang 24 seitlich begrenzen, ist jeweils eine Führungsbahn 34 ausgebildet (vgl. u.a. Fig.2a, 2b und 4a). An oder in der Führungsbahn 34 ist die Schiebewand 16 verschieblich geführt. Die Führungsbahn 34 ist jeweils als eine in der betreffenden Behälterwandung 36, 38 (Wandinnenseite) ausgebildete Nut 40 ausgeführt.

Die Führungsbahn 34 weist einen ersten Abschnitt 42 auf, in oder an dem sich die Schiebewand 16 in einer den Zugang 24 verschließenden Stellung befindet. Die Führungsbahn 34 weist außerdem einen zweiten Abschnitt 44 auf, in oder an dem sich die Schiebewand 16 in einer den Zugang 24 freigebenden Stellung befindet (Schiebewand 16 kann dann in den Innenraum 18 eingeschoben sein). Zudem weist die Führungsbahn 34 einen gekrümmten oder gebogenen Verbindungsabschnitt 46 auf, der den ersten Abschnitt 42 und den zweiten Abschnitt 44 miteinander verbindet.

Die in der Führungsbahn 34 geführten Abschnitte 16', 16" der Schiebewand 16 (eingesteckte Abschnitte) weisen geschäumte Kontaktflächen auf (in Fig.3a angedeutet). Diese Kontaktflächen können mit einer entlang der Verschieberichtung oder Längsrichtung 30 ausgerichteten Strukturierung in den geführten Abschnitten 16', 16" ausgebildet sein, und zwar insbesondere an der Innenseite 26 der Schiebewand 16 (nicht dargestellt) .

Die Schiebewand 16 weist am oberen Schiebewandende an der äußeren Flachseite 48 (Außenseite 48) einen abragenden Vorsprung 50 auf, der in der den Zugang 24 verschließenden Stellung der Schiebewand 16 einen am Isolierbehälter 10, insbesondere am Deckel 14, ausgebildeten Vorsprung 52 hintergreift (vgl. Fig.2a). Der Vorsprung 52 ist an der dem Innenraum 18 zugewandten Flachseite 54 (Unterseite 54) des Deckels 14 ausgebildet.

Die Schiebewand 16 weist an der äußeren Flachseite 48 einen abragenden Griffabschnitt 56 auf, der einer Bedienperson ein Greifen und verschieben der Schiebewand 16 erleichtert. Der Griffabschnitt 56 kann derart positioniert sein, dass dieser in der den Zugang 24 freigebenden Stellung (Schiebewand 16 in den Isolierbehälter 10 eingefahren) mit dem Vorsprung 52 in Kontakt gelangt (vgl. Fig.2b). Dadurch wird ein weiteres Einschieben der Schiebewand 16 unabhängig davon begrenzt, ob die Schiebewand 16 rückwärtig im Isolierbehälter 10 ansteht. Optional kann die Schiebewand 16 an der äußeren Flachseite 48 ein Beschriftungsfeld 58 aufweisen, bspw. für Einsteck- oder Aufklebeetiketten. Optional kann an oder in der Schiebewand 16 ein Thermometer 59 angeordnet sein, welches an der Außenseite 48 der Schiebewand die im Innenraum 18 herrschende Temperatur anzeigt. Das Thermometer 59 kann an der Innenseite 26 einen Temperaturfühler aufweisen.

Anmerkung: In Figur 2b ist das untere Ende der Schiebewand 16 (siehe Figur 2b, rechter Hand) der Einfachheit halber geradlinig eingezeichnet, tatsächlich wäre dieses jedoch durch die Führung in der Führungsbahn 24 (Verbindungsabschnitt 46) gekrümmt.

Im Folgenden werden der Behälterkorpus 12 und der abnehmbare Deckel 14 näher beschrieben. Der Isolierbehälter 10 bzw. der Behälterkorpus 12 weist einen Behälterboden oder eine Bodenplatte 60 auf, an der eine Standfläche 62 mit einem oder mehreren Standabschnitten ausgebildet ist. Gegenüberliegend zur Standfläche 62 ist eine Deckfläche 64 angeordnet, die am Deckel 14 ausgebildet ist (vgl. Fig.1a und 1b). Die Behälterwandungen 36, 38 (Seitenwände) begrenzen den Zugang 24 zu den Seiten hin.

Eine Rückwand 66 verbindet die Behälterwandungen 36, 38 an der vom Zugang 24 abgewandten Behälterseite (vgl. Figur 4a). Die Rückwand 66 weist eine geringere Höhe als die Behälterwandungen 36, 38 auf, um ein Einführen der Schiebewand 16 in die Führungsbahn 34 zu erleichtern. Die Schiebewand 16 kann vom rückwärtigen Ende 68 des zweiten Abschnitts 44 in die Führungsbahn 34 eingeführt werden.

Der Behälterboden oder die Bodenplatte 60 weist am Zugang 24 eine Abstufung 70 auf (vgl. Figur 4a). Am Zugang 24 befindet sich im Bereich der Führungsbahn 34 ein Abschnitt 72 eines ersten Bodenniveaus und, zum Innenraum 18 des Isolierbehälters 10 hin, ein Abschnitt 74 eines zweiten Bodenniveaus (Bodenniveau im Innenraum 18 des Isolierbehälters 10). Der Abschnitt 74 des zweiten Bodenniveaus ist durch die Abstufung 70 gegenüber dem Abschnitt 72 des ersten Bodenniveaus erhöht. Befindet sich die Schiebewand 16 in der den Zugang 24 verschließenden Stellung, überlappt die Schiebewand 16 mit der Abstufung 70 (vgl. Figur 2a). Die Unterkante der Schiebewand 16 befindet sich dann im Kontakt mit dem Abschnitt 72 eines ersten Bodenniveaus und überlappt dadurch die Abstufung 72 bzw. den Abschnitt 74 eines zweiten Bodenniveaus.

An den einander gegenüberliegenden Behälterwandungen 36, 38, die den Zugang 24 seitlich begrenzen, sind jeweils mehrere gleichartig ausgerichtete, insbesondere parallel zueinander angeordnete Erhebungen 76 ausgebildet (lediglich an der rechten Behälterwandung 38 dargestellt). Diese erlauben ein Einschieben von Tabletts oder Speisebehältern 20 (vgl. Figuren 1b, 2a und 2b).

Die Behälterwandungen 36, 38, die den Zugang 44 seitlich begrenzen, weisen in einem dem Deckel 14 zugewandten Wandungsabschnitt jeweils einen seitlich nach außen abragenden Vorsprung 78, 80 zum Greifen des Isolierbehälters 10 auf (korpusseitige Griffabschnitte 78, 80; siehe u.a. Figur 4a).

Der Deckel 14 ist in seiner Breite derart dimensioniert, dass dieser im auf dem Behälterkorpus 12 aufgesetzten Zustand die korpusseitigen Griffabschnitte 78, 80 überdeckt (vgl. Figur 1a und 1b). So überdecken seitliche Abschnitte 82, 84 des Deckels 14 die korpusseitigen Griffabschnitte 78, 80 und schließen zu den Seiten hin bündig mit diesen ab.

Der Deckel 14 weist an der Deckfläche 64 (Deckeloberseite 64) angrenzend an die Längskanten des Deckels 14 in den seitlichen Abschnitten 82, 84 seitliche Aussparungen bzw. Vertiefungen 85, 87 auf (vgl. Figur 4b). Diese korrespondieren jeweils mit einem an der Standfläche 62 ausgebildeten Standabschnitt. Dies erleichtert eine Stapelbarkeit des Isolierbehälters 10, wie oben beschrieben.

Der Deckel 14 weist an einer im montierten Zustand dem Innenraum 18 zugewandten Flachseite 54 (Unterseite 54 gleichartig orientierte, insbesondere parallel zueinander angeordnete (deckelseitige) Profilmerkmale auf (nicht dargestellt). Die deckelseitigen Profilmerkmale wirken mit am Behälterkorpus 12 ausgebildeten komplementären Profilmerkmalen 86, 88 zusammen (korpusseitige Profilmerkmale 86, 88).

Die korpusseitigen Profilmerkmale 86, 88 sind vorliegend als Nut 86, 88 (Längsnut) ausgebildet, die jeweils am oberen Ende der Behälterwandungen 36, 38 angeordnet sind (benachbart zu den Griffabschnitten 78, 80). Die deckelseitigen Profilmerkmale sind als komplementäres Nuteingriffselement ausgebildet (nicht dargestellt). Damit kann der Deckel 14 auf den Behälterkorpus 12 aufgeschoben werden.

Der Deckel 14 weist an seinem rückwärtigen (im auf dem Behälterkorpus 12 montierten Zustand vom Zugang 24 abgewandten) Ende 90 einen Wandungsvorsprung 92 auf, der den durch die Rückwand 66 zwischen den Behälterwandungen 36, 38 (Seitenwänden 36, 38) freigelassenen Wandungsbereich bei aufgesetztem Deckel 14 verschließt (vgl. Figur 2a und 2b). Der Wandungsvorsprung 92 ragt von der Unterseite 54 des Deckels 14 ab.

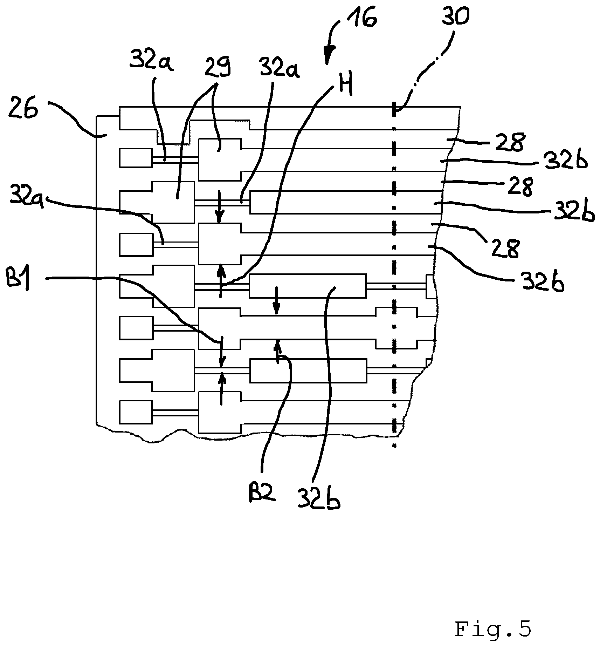

Figur 5 zeigt eine alternative Ausführungsform der Schiebewand 16, wobei lediglich ein linker oberer Bereich gezeichnet ist. Bei dieser sind die Abstandselemente 29 von zwei zueinander benachbarten Nuten 28 zueinander in normaler Betriebslage seitlich versetzt angeordnet. Die Abstandselemente 29 befinden sich ferner nicht in der Mitte der Schiebewand 16, sondern in der Nähe ihren seitlichen Rändern. Dabei sei an dieser Stelle darauf hingewiesen, dass die in Figur 5 gezeichnete Schiebewand 16 symmetrisch zur Längserstreckungsrichtung 30 ist.

Ferner weisen die Abstandselemente 29 eine Höhe H auf, die ungefähr bis zu einer Mitte der beiden benachbarten Nuten 28 reicht. Ferner weist bei dieser Ausführungsform ein in normaler Betriebslage unmittelbar oberhalb oder unterhalb von einem Abstandselement 29 angeordneter Rippenabschnitt 32a, der zwischen zwei benachbarten Nuten 28 angeordnet ist, eine geringere Breite B1 auf als ein Rippenabschnitt 32b, der eine Breite B2 aufweist und oberhalb oder unterhalb von einem benachbarten Rippenabschnitt 32b angeordnet ist.

## Patentansprüche

1. Isolierbehälter (10) mit einem durch Behälterwandungen (14, 22, 36, 38, 60, 66) begrenzten Innenraum (18), wobei eine der Behälterwandungen (22) einen Zugang (24) zum Innenraum (18) aufweist, der mit einer Schiebewand (16) ausgestattet ist, wobei die Schiebewand (16) zwischen einer den Zugang (24) verschließenden Stellung und einer den Zugang (24) freigebenden Stellung verschiebbar ist, **dadurch gekennzeichnet, dass** die Schiebewand (16) mehrere relativ zueinander bewegliche, insbesondere verschwenkbare, Abschnitte (25) aufweist, wobei die Schiebewand (16) einstückig aus geschäumtem Kunststoff ausgebildet ist.

2. Isolierbehälter (10) nach Anspruch 1, **dadurch gekennzeichnet, dass** die Schiebewand (16) an einer Flachseite (26) mehrere voneinander beabstandete Nuten (28) aufweist, die quer zur Verschieberichtung (30) und/oder Längserstreckungsrichtung (30) der Schiebewand (16) angeordnet sind.

3. Isolierbehälter (10) nach Anspruch 2, **dadurch gekennzeichnet, dass** in den Nuten (28) der Schiebewand (16) jeweils mindestens ein Abstandselement (29) angeordnet ist, welches vorzugsweise zur Stirnfläche (33) der zwischen den Nuten (28) liegenden Materialabschnitte (32) zumindest bündig ist.

4. Isolierbehälter (10) nach Anspruch 3, **dadurch gekennzeichnet, dass** die Abstandselemente (29) von zwei zueinander benachbarten Nuten (28) zueinander in normaler Betriebslage seitlich versetzt angeordnet sind und eine Höhe (H) aufweisen, die mindestens ungefähr bis zur Mitte der benachbarten Nuten (28) reicht.

5. Isolierbehälter (10) nach wenigstens einem der Ansprüche 3 oder 4, **dadurch gekennzeichnet, dass** ein in normaler Betriebslage unmittelbar oberhalb oder unterhalb von einem Abstandselement (29) angeordneter Rippenabschnitt (32a), der zwischen zwei benachbarten Nuten (28) angeordnet ist, eine geringere Breite (B1) aufweist als ein Rippenabschnitt (32b), der eine Breite (B2) aufweist und der oberhalb oder unterhalb von einem benachbarten Rippenabschnitt (32b) angeordnet ist.

6. Isolierbehälter (10) nach einem der voranstehenden Ansprüche, **dadurch gekennzeichnet, dass** an den Innenseiten von zwei einander gegenüberliegenden Behälterwandungen (36, 38), die den Zugang (24) seitlich begrenzen, jeweils eine Führungsbahn (34) ausgebildet ist, an oder in der die Schiebewand (16) verschieblich geführt ist.

7. Isolierbehälter (10) nach Anspruch 6, **dadurch gekennzeichnet, dass** die in der Führungsbahn (34) geführten Abschnitte der Schiebewand (16) geschäumte Kontaktflächen (16', 16'') aufweisen, insbesondere mit einer entlang der Verschieberichtung (30) und/oder der Längserstreckungsrichtung (30) ausgerichteten Strukturierung in den geführten Abschnitten.

8. Isolierbehälter (10) nach wenigstens einem der Ansprüche 6-7, **dadurch gekennzeichnet, dass** die Führungsbahn (34) mindestens bereichsweise gekrümmt verläuft.

9. Isolierbehälter (10) nach einem der voranstehenden Ansprüche, **dadurch gekennzeichnet, dass** der Isolierbehälter (10) einen Behälterkorpus (12) und einen abnehmbaren Deckel (14) aufweist.

10. Isolierbehälter (10) nach einem der voranstehenden Ansprüche, **dadurch gekennzeichnet, dass** die rückwärtige Behälterwandung (66), die dem Zugang (24) gegenüberliegt, eine geringere Höhe aufweist als die seitlichen Behälterwandungen (36, 38), die den Zugang (24) seitlich begrenzen.

11. Isolierbehälter (10) nach Anspruch 9 oder 10, **dadurch gekennzeichnet, dass** der Deckel (14) einen Wandungsvorsprung (92) aufweist, der ausgebildet ist, um im montierten Zustand einen von der rückwärtigen Behälterwandung (66) zwischen den seitlichen Behälterwandungen (36, 38) freigelassenen Wandungsabschnitt zu verschließen.

12. Isolierbehälter (10) nach einem der voranstehenden Ansprüche, **dadurch gekennzeichnet, dass** der Behälterboden (60) am Zugang (24) eine Abstufung (70) aufweist, mit der die Schiebewand (16) in der den Zugang (24) verschließenden Stellung überlappt.

13. Isolierbehälter (10) nach einem der voranstehenden Ansprüche, **dadurch gekennzeichnet, dass** die Schiebewand (16) am oberen Schiebewandende an einer Flachseite (48) einen abragenden Vorsprung (50) aufweist, der einen am Isolierbehälter (10), insbesondere am Deckel (14), ausgebildeten Vorsprung (52), in der den Zugang (24) verschließenden Stellung der Schiebwand (16) hintergreift.

14. Isolierbehälter (10) nach einem der voranstehenden Ansprüche, **dadurch gekennzeichnet, dass** die Schiebewand (16) aus expandiertem Polystyrol (EPS) oder expandiertem Polypropylen (EPP) ausgebildet ist.

## Claims

1. Insulating container (10) with an interior space (18) delimited by container walls (14, 22, 36, 38, 60, 66), wherein one of the container walls (22) comprises an access (24) to the interior space (18) equipped with a sliding wall (16), whereby the sliding wall (16) can slide between a position that closes the access (24) and a position that opens the access (24), **characterised in that** the sliding wall (16) comprises a plurality of portions (25) that can move, in particular pivot, relative to one another, wherein the sliding wall(16) is made in unitary manner from foamed plastic material.

2. Insulating container (10) as per claim 1, **characterised in that** the sliding wall (16) on a flat side comprises a plurality of grooves (28) spaced apart from each other and arranged transversely to the sliding direction (30) and/or longitudinal direction (30) of the sliding wall (16).

3. Insulating container (10) as per claim 2, **characterised in that** there is at least one spacing element (29) in each of the grooves (28) of the sliding wall (16), that is at least flush preferably with the front side (33) of the material portions (32) arranged between the grooves (28).

4. Insulating container (10) as per claim 3, **characterised in that** in a normal operating state the spacing elements (29) of two adjacent grooves (28) are laterally offset to each other and comprise a height (H) that extends at least to about the middle of the neighbouring grooves (28).

5. Insulating container (10) as per at least one of claims 3 or 4, **characterised in that** a rib segment (32a) positioned between two adjacent grooves (28) and immediately above or below a spacing element (29) in normal operating position comprises a smaller width (W1) than a rib segment (32b) comprising a width (B2) and that is positioned above or below an adjacent rib segment (32b).

6. Insulating container (10) as per one of the preceding claims, **characterised in that** there is a guide track (34) at the interior sides of two opposing container walls (36, 38) that delimit the access (24) on the sides, on or within which the sliding wall (16) is movably guided.

7. Insulating container (10) as per claim 6, **characterised in that** the portions of the sliding wall (16) guided in the guide track (34) comprise foamed contact surfaces (16', 16"), in particular with a structuring along the sliding direction and/or the longitudinal direction (30) in the guided portions.

8. Insulating container (10) as per at least one of the claims 6-7, **characterised in that** the guide track (34) is at least in regions curved.

9. Insulating container (10) as per one of the preceding claims, **characterised in that** the insulating container (10) comprises a container body (12) and a removable cover (14).

10. Insulating container (10) as per one of the preceding claims, **characterised in that** the rear container wall (66) opposite the access (24) has a lesser height than the side container walls (36, 38) that delimit the access (24) on the sides.

11. Insulating container (10) as per claim 9 or 10, **characterised in that** the cover (14) comprises a wall protrusion (92) designed to close a wall portion left open of the rear container wall (66) between the side container walls (36, 38) in its mounted state.

12. Insulating container (10) as per one of the preceding claims, **characterised in that** the container floor (60) comprises an increment (70) at the access (24), with which the sliding wall (16) overlaps when it is in the position closing the access (24).

13. Insulating container (10) as per one of the preceding claims, **characterised in that** the sliding wall (16) comprises a protrusion (50) on a flat side (48) on the top of the sliding wall, which locks into a protrusion on the insulating container (10), in particular on the cover (14), when the sliding wall (16) is in the position closing the access.

14. Insulating container (10) as per one of the preceding claims, **characterised in that** the sliding wall (16) is made from expanded polystyrene (EPS) or expanded polypropylene (EPP).

## Revendications

1. Récipient isolant (10) avec un espace intérieur (18) délimité par des parois de récipient (14, 22, 36, 38, 60, 66), dans lequel une des parois de récipient (22) présente un accès (24) à l'espace intérieur (18), qui est équipé d'une paroi coulissante (16), dans lequel la paroi coulissante (16) peut coulisser entre une position fermant l'accès (24) et une position libérant l'accès (24), **caractérisé en ce que** la paroi coulissante (16) présente plusieurs parties (25) mobiles les unes par rapport aux autres, en particulier pivotantes, dans lequel la paroi coulissante (16) est réalisée d'une seule pièce en plastique moussé.

2. Récipient isolant (10) selon la revendication 1, **caractérisé en ce que** la paroi coulissante (16) présente sur une face plate (26) plusieurs rainures (28) espacées les unes des autres, qui sont disposées transversalement par rapport à la direction de coulissement (30) et/ou direction d'étendue longitudinale (30) de la paroi coulissante (16).

3. Récipient isolant (10) selon la revendication 2, **caractérisé en ce que** respectivement au moins un élément d'écartement (29), lequel est de préférence au moins à fleur par rapport à la surface avant (33) des parties de matériau (32) situées entre les rainures (28), est disposé dans les rainures (28) de la paroi coulissante (16).

4. Récipient isolant (10) selon la revendication 3, **caractérisé en ce que** les éléments d'écartement (29) de deux rainures (28) voisines l'une de l'autre sont disposés de manière décalée latéralement l'un de l'autre dans une position de fonctionnement normale et présentent une hauteur (H), qui va au moins à peu près jusqu'au centre des rainures (28) voisines.

5. Récipient isolant (10) selon au moins l'une des revendications 3 ou 4, **caractérisé en ce qu'**une partie de nervure (32a) disposée directement au-dessus ou au-dessous d'un élément d'écartement (29) dans la position de fonctionnement normale, qui est disposée entre deux rainures (28) voisines, présente une largeur (B1) plus petite qu'une partie de nervure (32b), qui présente une largeur (B2) et qui est disposée au-dessus ou au-dessous d'une partie de nervure (32b) voisine.

6. Récipient isolant (10) selon l'une quelconque des revendications précédentes, **caractérisé en ce que** respectivement une bande de guidage (34), sur ou dans laquelle la paroi coulissante (16) est guidée de manière coulissante, est réalisée sur les faces intérieures de deux parois de récipient (36, 38) opposées l'une à l'autre.

7. Récipient isolant (10) selon la revendication 6, **caractérisé en ce que** les parties de la paroi coulissante (16) guidées dans la bande de guidage (34) présentent des surfaces de contact (16', 16") moussées, en particulier avec une structuration orientée le long de la direction de coulissement (30) et/ou de la direction d'étendue longitudinale (30) dans les parties guidées.

8. Récipient isolant (10) selon au moins l'une des revendications 6-7, **caractérisé en ce que** la bande de guidage (34) s'étend au moins par endroits de manière courbée.

9. Récipient isolant (10) selon l'une quelconque des revendications précédentes, **caractérisé en ce que** le récipient isolant (10) présente un corps de récipient (12) et un couvercle (14) amovible.

10. Récipient isolant (10) selon l'une quelconque des revendications précédentes, **caractérisé en ce que** la paroi de récipient arrière (66), qui est opposée à l'accès (24), présente une hauteur plus petite que les parois de récipient (36, 38) latérales, qui délimitent latéralement l'accès (24).

11. Récipient isolant (10) selon la revendication 9 ou 10, **caractérisé en ce que** le couvercle (14) présente une partie saillante de paroi (92), qui est réalisée pour fermer une partie de paroi laissée libre entre les parois de récipient latérales (36, 38) par la paroi de récipient arrière (66) dans l'état monté.

12. Récipient isolant (10) selon l'une quelconque des revendications précédentes, **caractérisé en ce que** le fond de récipient (60) présente sur l'accès (24) un étagement (70), avec laquelle la paroi coulissante (16) est en chevauchement dans la position fermant l'accès (24) .

13. Récipient isolant (10) selon l'une quelconque des revendications précédentes, **caractérisé en ce que** la paroi coulissante (16) présente sur l'extrémité de paroi coulissante supérieure sur une face plate (48) une partie saillante (50) en saillie, qui vient se plaquer derrière une partie saillante (52) réalisée sur le récipient isolant (10), en particulier sur le couvercle (14), dans la position de la paroi coulissante (16) fermant l'accès (24).

14. Récipient isolant (10) selon l'une quelconque des revendications précédentes, **caractérisé en ce que** la paroi coulissante (16) est réalisée à partir de polystyrène expansé (EPS) ou de polypropylène expansé (EPP) .
